# EUROPEAN PATENT APPLICATION

(11) **EP 1 039 727 A2**
(43) Date of publication of application: **27.09.2000**
(21) Application number: 00105853.6
(22) Date of filing: 20.03.2000
(51) Int. Cl.: H04M 1/247, H04M 1/725

(54) **Method for managing the user's information in a mobile phone**

(30) Priority: 19.03.1999 KR 9909417
(71) Applicant: SAMSUNG ELECTRONICS CO., LTD., Suwon-City, Kyungki-do (KR)
(72) Inventor: Sim, Seng-Wook, Suwon-shi, Kyonggi-do (KR); Park, Joung-Kyou, Seoul (KR)
(74) Representative: Grünecker, Kinkeldey, Stockmair & Schwanhäusser Anwaltssozietät

(57) **Abstract**

A method for managing the user's information stored in a storage device provided in a mobile phone, comprises the steps of separately displaying on the display screen a user information display window for displaying the state of the user's information selectively under processing by the user such as inputting, revising, retrieving, and deleting, and a control command input window for displaying the user's control commands such as editing, deleting, and storing; and selectively editing, storing, retrieving, revising, or deleting the user's information according to a control command inputted through the control command input window.

## Description

### BACKGROUND OF THE INVENTION

### 1. Field of the Invention

The present invention relates to a method for managing the user's information stored in a digital mobile phone.

### 2. Description of the related art

Recently, the digital mobile phone has been developed to be more convenient to the user with various additional functions. Namely, in addition to the original voice communication function, it has evolved to serve as a data processing terminal for processing data such as storing, revising, and transmitting data. For example, one of such additional functions is the digital phone book for storing a list of phone numbers into a storage device provided in the mobile phone to retrieve as needed. Such storage device may be used for storing varieties of information. Thus, in order to meet the requirements for providing such additional functions, the mobile phone has been developed to include additional software and hardware.

### SUMMARY OF THE INVENTION

It is an object of the present invention to provide a method for managing the user's information such as name, phone number, short message, etc. stored in a storage device of the mobile phone, especially for storing, revising, deleting, and retrieving it.

According to the present invention, a method for managing the user's information stored in a storage device provided in a mobile phone, comprises the steps of separately displaying on the display screen a user information display window for displaying the state of the user's information selectively under processing by the user such as inputting, revising, retrieving, and deleting, and a control command input window for displaying the user's control commands such as editing, deleting, and storing; and selectively editing, storing, retrieving, revising, or deleting the user's information according to a control command inputted through the control command input window.

The present invention will now be described more specifically with reference to the drawings attached only by way of example.

### BRIEF DESCRIPTION OF THE ATTACHED DRAWINGS

Fig. 1 is a block diagram for illustrating the internal structure of a digital mobile phone embodying the present invention;
Figs. 2A to 2C are flow charts for illustrating the inventive method for managing the user's information entered in the storage device provided in a digital mobile phone; and
Fig. 3 is a schematic diagram for illustrating the user's information displayed on the display screen according to the inventive method.

### DETAILED DESCRIPTION OF THE PREFERRED EMBODIMENT

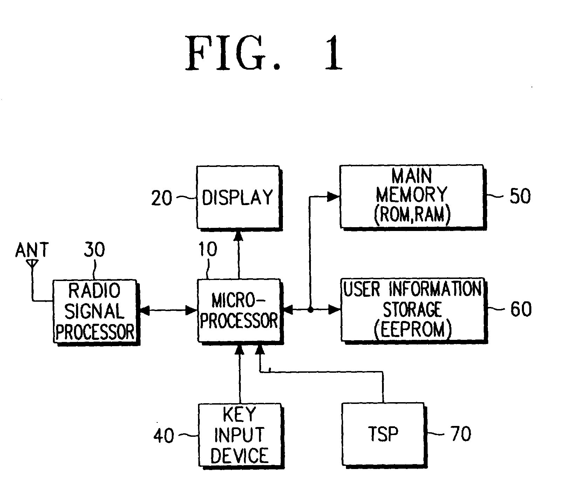

Referring to Fig. 1, a microprocessor 10 controls the entire function of a digital mobile phone including displaying, searching, retrieving, inputting, storing, and transmitting the user's information. A display 20 consists of an LCD to display the information relating to the operational state of the mobile phone with numbers, characters, symbols, etc. According to the present invention, the microprocessor 10 controls the display 20 to separately display a user information display window for displaying the state of the user's information selectively under processing by the user such as inputting, revising, retrieving, and deleting, and a control command input window for displaying the user's control commands such as editing, deleting, and storing. The display 20 includes a buffer to help displaying of the information.

A radio signal processor 30 processes the radio signals transmitted between the mobile phone and base stations. By this the radio signals received are converted into the intermediate frequency, then into base band, and finally into corresponding digital signals. When transmitting, the digital signals are oppositely convened.

A key input device 40 consists of a plurality of numeric and functional keys to generate particular key data necessary for inputting the user's information as well as setting various functional states. Of course, the functional keys may also serve to delete, store, retrieve, and transmit of the user's information. In addition to the key input device 40 may be included a touch screen panel (TSP) 70, by which the user may selectively input the information displayed on the screen of the display 20 by touching the screen. For example, the control command input window located in the TSP 70 displays the icons of various control commands selectively touched to execute the selected command. When selectively touched, the TSP 70 converts the points pressed into touch screen panel data consisting of data of X and Y coordinates representing the their positions and state data determining whether X and Y coordinate data are continuously generated. Such screen panel data are recognized and processed by the microprocessor.

A main memory 50 consists of a ROM for storing a control program to control the entire operation of the mobile phone including managing, searching, retrieving, transmitting, etc. of the user's information stored, and a RAM for temporarily storing data generated during execution of the control program. The ROM generally consists of a flash memory and EEPROM. A user information storage 60 consists of an EEPROM for storing various data inputted by the user or received from an external information instrument.

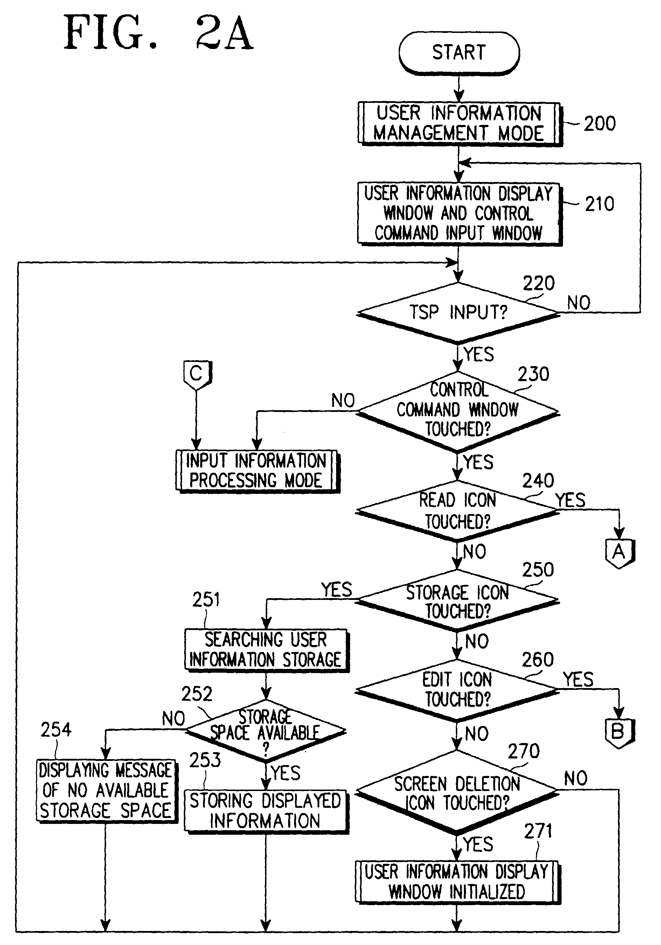

Describing the process of managing the user's information stored in the mobile phone in connection with Figs. 2A to 2C, user information management mode is firstly entered in step 200 as shown in Fig. 2A. The user information is stored in the user information storage 60, including alphabet or graphic or voice memo, electronic phone book, schedule, etc. In the present embodiment, the graphic memo inputted through the TSP 70 is used as a typical example for describing the process. In step 210, the screen of the display 20 separately displays the user information display window and control command input window. The user information display window is a particular region for displaying the graphic memo stored by the user while the control command input window is a particular region for displaying the control command icons to control the information displayed in the user information display window. The control command icons include retrieving icon for retrieving the user information displayed, storing icon for storing it, edit icon for editing it, and delete icon for deleting it. These icons are used to execute the respective commands by touching the corresponding regions of the TSP 70.

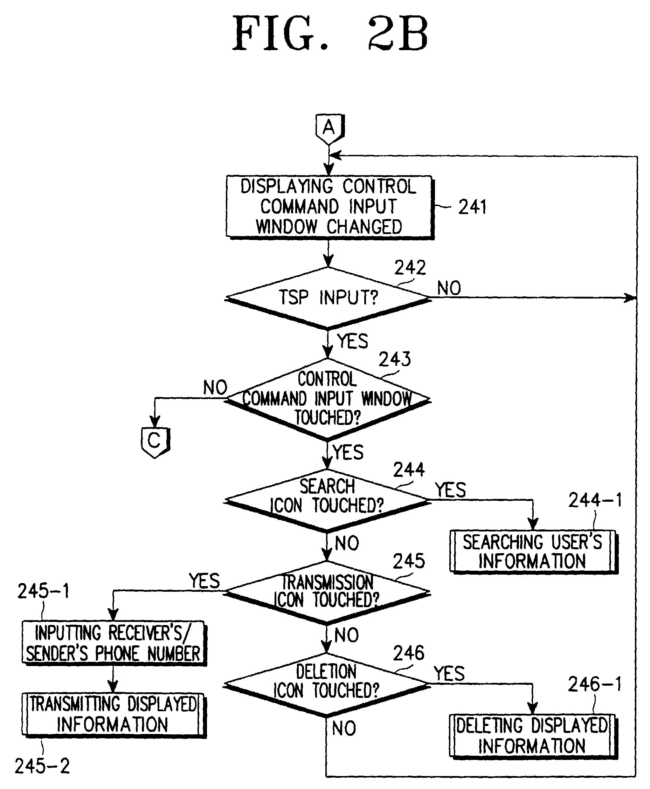

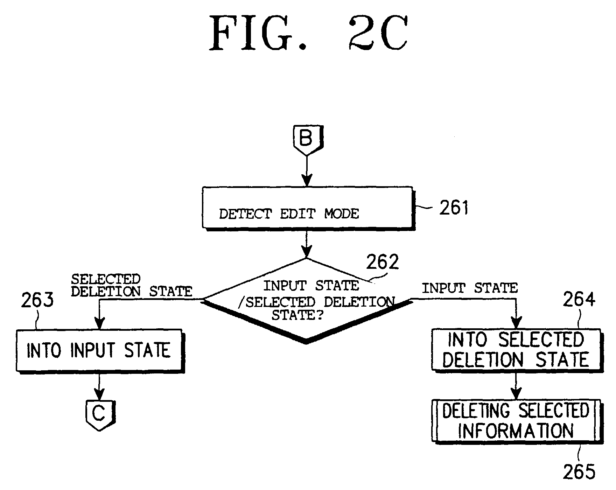

Touching the TSP 70 in step 220, it is determined in step 230 whether the touched input represents a particular command icon in the control command input window. If so, it is determined to be the retrieving (read) icon in step 240, the storing icon in step 250, edit icon in step 260, or the delete icon in step 270, so that the corresponding operation is performed. Namely, if it represents the retrieving icon in step 240, the process of Fig. 2B is performed, if the storing icon in step 250, the operation of step 251 performed, if the edit icon in step 260, the process of Fig. 2C performed, and if the delete icon in step 270, the operation of step 271 performed. However, if it does not represent a particular command icon in the control command input window in step 230, the process goes to step 231 to process the information inputted by the user since it is regarded as the touch input through the user information display window. Namely, it represents the information entered by the user through the TSP 70.

Referring Fig. 2B for describing the process of retrieving the information, the control command input window is displayed changed in step 241. In this case, the control command input window displays the search icon to search the information, transmit icon to transmit the information displayed, and delete icon to delete the information displayed from the user storage. Of course, such icon commands may be performed through the key input device in addition to the key input device. Determining in step 242 whether the TSP 70 is inputted, it is determined to be a particular icon in the control command input window in step 243. If not so, the process goes to step 231. However, if so, it is determined to represent the search icon in step 244, transmit icon in step 245, or delete icon in step 246, so that the respective operations are executed. For example, the step 244 proceeds to step 244-1 to search the user information. The search may be sequentially performed through sub-steps represented by sub-icons respectively representing the previous search and subsequent search. Likewise, the step 245 proceeds to step 245-1 to input receiver's/sender's phone number, then to step 245-2 to transmit the displayed information. Also the step 246 proceeds to step 246-1 to delete the displayed information from the user information storage 60. Thus, the process of Fig. 2B is to manage the user information such as searching, transmitting, deleting, etc. of the user information.

Touching the storing icon in step 250, the user information storage 60 is firstly searched in step 251 to determine whether it has available storage space. Namely, the addresses of the storage are sequentially searched to detect in step 252 available addresses to additionally store information. If there is available storage space in step 252, the information displayed is stored into it. However, if there is no available storage space, the message of no available storage space is displayed in step 254, returning to step 220. Of course, the process returns to step 220 after completing step 253.

Touching the edit icon in step 260, the process of Fig. 2C is performed. Detecting the edit mode in step 261, it is determined in step 262 to be the input state or selected deletion. In this case, the input state represents to input the additional information made by the user for revising the information currently displayed while the selected deletion represents to delete the part selected by the user of the information currently displayed. Hence, if step 262 represents the selected deletions, the mobile phone is changed into the input information processing mode in step 263. However, if step 262 represents the input state, the mobile phone is changed into the selected deletion state in step 264 to delete the part selected by the user of the information currently displayed in step 265. In other words, if the present edit state is the selected deletion state and the edit icon is touched, the selected deletion state is exchanged into the input state. On the other hand, if the present edit state is the input state and the edit icon is touched, the input state is exchanged into the selected deletion state.

Touching the screen deletion icon in step 270, the user information display window is initialized canceling the information currently displayed. The screen deletion is to make the information currently displayed simply disappear from the screen without deleting the information from the user information storage 60. Namely, the screen deletion is to delete the displayed information from the display buffer. Then, the process returns to step 220.

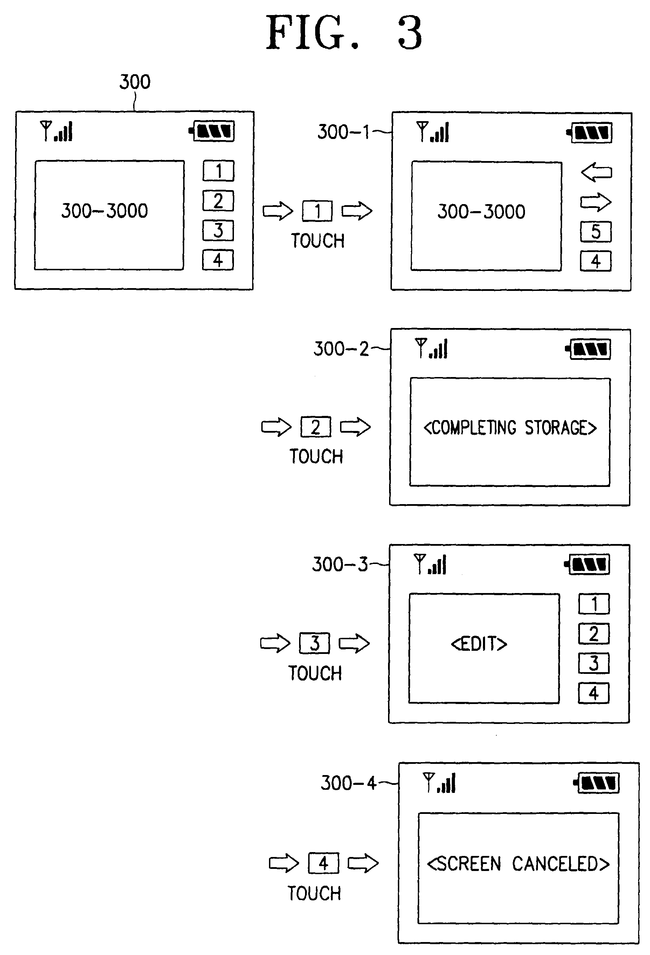

Fig. 3 illustrates the display screen displaying the user information managed by the user. The screen represented by reference numeral 300 separately displays the user information display window and the control command input window. This is produced by executing step 210. The screen represented by reference numeral 300-1 The screen shows the retrieving icon, delete icon, and transmit icon. The screen represented by reference numeral 300-2 displays selection of the storing icon produced by executing step 250 in the state of reference numeral 300, resulting from the process of Fig. 2C. This represents the completion of storing the displayed information. The screen represented by reference numeral 300-3 displays selection of the edit icon produced by executing step 260 in the state of reference numeral 300, resulting from the process of Fig. 2D). This represents the editing state of the displayed information. The screen represented by reference numeral 300-4 displays selection of the delete icon produced by executing step 270 in the state of reference numeral 300, resulting from the process of Fig. 2A. This represents the state of the displayed information canceled from the screen.

While the present invention has been described in connection with specific embodiments accompanied by the attached drawings, it will be readily appreciated that various changes and modifications may be made thereto without departing the gist of the present invention.

## Claims

1. A method for managing the user's information stored in a storage device provided in a mobile phone, comprising the steps of:
separately displaying on the display screen a user information display window for displaying the state of the user's information selectively under processing by the user such as inputting, revising, retrieving, and deleting, and a control command input window for displaying the user's control commands such as editing, deleting, and storing; and
selectively editing, storing, retrieving, revising, or deleting the user's information according to a control command inputted through said control command input window.

2. A method as defined in Claim 1, wherein said control command input window is positioned in one side of said user information display window.

3. A method as defined in Claim 1, wherein said control command input window is designed to show a retrieving icon entered for retrieving the stored information.

4. A method as defined in Claim 1, wherein said control command input window is designed to show a storing icon entered for storing the information displayed.

5. A method as defined in Claim 1, wherein said control command input window is designed to show an edit icon entered for editing the information displayed.

6. A method as defined in Claim 1, wherein said control command input window is designed to show a delete icon entered for canceling the information displayed.

7. A method as defined in Claim 1, wherein said control command input window is designed to show the process of searching, transmitting, and deleting the information displayed.

8. A method for managing the user's information stored in a storage device provided in a mobile phone, comprising the steps of:
displaying a user information display window for displaying the state of the user's information selectively under processing by the user such as inputting, revising, retrieving, and deleting;
displaying a retrieving icon entered for retrieving the stored information;
displaying a storing icon entered for storing the information displayed;
displaying an edit icon entered for editing the information displayed;
displaying a delete icon entered for canceling the information displayed; and
processing the information inputted by entering one of the icons described above.

9. A method as defined in Claim 8, wherein, upon entering said retrieving icon, the step of processing the information further includes the steps of displaying a search icon entered for searching the stored information, and displaying a transmit icon entered for transmitting the information displayed.

10. A method as defined in Claim 8, wherein, upon entering said storing icon, the step of processing the information further includes the steps of searching the remaining storage space of said storage device, and additionally storing the information displayed into the remaining storage space.

11. A method as defined in Claim 8, wherein, upon entering said edit icon, the step of processing the information further includes the steps of deleting a selected part of the information displayed, and displaying the user's information additionally entered.
